# EUROPÄISCHE PATENTANMELDUNG

(11) **EP 2 687 975 A1**
(43) Veröffentlichungstag der Anmeldung: **22.01.2014**
(21) Anmeldenummer: 12177048.1
(22) Anmeldetag: 19.07.2012
(51) Int. Cl.: G06F 3/12, B07C 3/10, G05B 19/12

(54) **Verfahren zum Verarbeiten eines bedruckten Bogens in einer Maschine**

(71) Anmelder: Adolf Mohr Maschinenfabrik GmbH & Co. KG, 65719 Hofheim am Taunus (DE)
(72) Erfinder: Gottschalk, Gerd, 65779 Kelkheim (DE)
(74) Vertreter: Quermann, Helmut

(57) **Zusammenfassung**

Die Erfindung betrifft ein Verfahren zum Verarbeiten eines bedruckten Bogens (4) in einer Maschine (1).

Dieses Verfahren weist folgende Merkmale auf:
- Zuführen von für die Verarbeitung des bedruckten Bogens (4) in der Maschine (1) relevanten Daten sowie von mit diesen Daten verknüpften Daten betreffend das Druckbild des Bogens zu einem internen Vorratsspeicher (2) der Maschine und/oder einem externen Vorratsspeicher (2), wobei im Vorratsspeicher (2) weitere Daten abspeicherbar sind,
- Erfassen des realen Druckbildes des Bogens (4) beim bzw. nach dem Zuführen des zu verarbeitenden Bogens zur Maschine (1) mittels eines Bildverarbeitungssystems (3),
- Vergleichen des erfassten realen Druckbildes mit dem abgespeicherten Druckbild, sowie Identifizierung der für die Verarbeitung des bedruckten Bogens relevanten Daten im Vorratsspeicher (2) bei Übereinstimmung von realem Druckbild und abgespeichertem Druckbild,
- Laden der für die Verarbeitung des bedruckten Bogens relevanten Daten in einen der Maschine (1) zugeordneten Arbeitsspeicher (9).

Ein solches Verfahren ermöglicht ein fehlerfreies, zügiges Verarbeiten des Bogens bzw. eines aus einer Vielzahl von Bogen gebildeten Stapels mittels der Maschine.

## Beschreibung

Die Erfindung betrifft ein Verfahren zum Verarbeiten eines bedruckten Bogens in einer Maschine.

Eine solche Maschine findet einzeln Verwendung oder aber es ist eine Anlage aus einzelnen Maschinen gebildet.

Eine solche Anlage weist beispielsweise als wesentliche Maschine eine Schneidmaschine auf, die als Planschneidmaschine ausgebildet ist. Die Planschneidmaschine dient dem Schneiden von aus einzelnen bedruckten Bogen gebildeten Stapeln. Diese Stapel werden, beispielsweise zum Trennen des jeweiligen Bogens, der eine Vielzahl aufgedruckter Etiketten aufweist, durch Längs- und Querschneiden in eine Vielzahl von Teilstapeln geschnitten. Beispielsweise ist im Verarbeitungsfluss vor dieser Maschine, bei der Anordnung einer Anlage, ein Stapelwender zum Wenden eines großen Gesamtstapels, eine Abstapelvorrichtung zum Abstapeln einzelner Stapel, die die bedruckten Bogen aufweisen, angeordnet. Im Verarbeitungsfluss vor der Schneidmaschine kann zudem eine Rüttelvorrichtung zum kantengenauen Ausrichten des zu schneidenden Stapels vorgesehen sein, so dass dieser Stapel quaderförmig ausgerichtet vorliegt. Im Bearbeitungsfluss hinter der Schneidmaschine ist beispielsweise eine Puffervorrichtung, eine Rückstapelvorrichtung, eine Stanzeinrichtung zum Stanzen des jeweiligen geschnittenen Teilstapels oder eine Banderoliervorrichtung zum Banderolieren des Teilstapels bzw. des gestanzten Teilstapels vorgesehen.

Bei der jeweiligen Maschine, insbesondere den die Anlage bildenden Maschinen, sind somit die unterschiedlichsten Verarbeitungsschritte vorzunehmen, die vom jeweiligen abzuarbeitenden Auftrag abhängen. Hierbei ist man bestrebt, die Verarbeitung des bedruckten Bogens, sei es des einzelnen Bogens oder eines aus einer Vielzahl bedruckter Bogen gebildeten Stapels weitgehend automatisiert, insbesondere vollständig automatisch durchzuführen. Unter diesem Aspekt ist es bekannt, Daten aus Prozessen, die der Verarbeitung des bedruckten Bogens in der Maschine vorgelagert sind, zu verwenden.

Aufgabe der vorliegenden Erfindung ist es, ein Verfahren zum Bearbeiten eines bedruckten Bogens in einer Maschine anzugeben, das ein fehlerfreies, zügiges Verarbeiten des bedruckten Bogens bzw. eines aus bedruckten Bogen gebildeten Stapels mittels der Maschine ermöglicht.

Die Erfindung schlägt ein Verfahren zum Verarbeiten eines bedruckten Bogens in einer Maschine mit folgenden Merkmalen vor:
- Zuführen von für die Verarbeitung des bedruckten Bogens in der Maschine relevanten Daten sowie von mit diesen Daten verknüpften Daten betreffend das Druckbild des Bogens zu einem internen Vorratsspeicher der Maschine und/oder einem externen Vorratsspeicher, wobei im Vorratsspeicher weitere Daten abspeicherbar sind,
- Erfassen des realen Druckbildes des Bogens beim bzw. nach dem Zuführen des zu verarbeitenden Bogens zur Maschine mittels eines Bildverarbeitungssystems,
- Vergleichen des erfassten realen Druckbildes mit dem abgespeicherten Druckbild, sowie Identifizierung der für die Verarbeitung des bedruckten Bogens relevanten Daten im Vorratsspeicher bei Übereinstimmung von realem Druckbild und abgespeichertem Druckbild,
- Laden der für die Verarbeitung des bedruckten Bogens relevanten Daten in einen der Maschine zugeordneten Arbeitsspeicher.

Wesentlich ist somit, dass dem Vorratsspeicher, sei es der interne Vorratsspeicher oder der externe Vorratsspeicher, nicht nur die relevanten Daten des bedruckten Bogens, der in der Maschine zu verarbeiten ist, zugeführt werden, sondern auch Daten betreffend das Druckbild des Bogens, wobei diese Daten mit den für die Verarbeitung des bedruckten Bogens relevanten Daten verknüpft werden, damit eine Zuordnung dieser unterschiedlichen Daten gegeben ist. Bei dem Druckbild des Bogens handelt es sich somit um das Echtbild des Bogens. Der Vorratsspeicher dient der Abspeicherung weiterer Daten, somit von Daten, die in keinem Zusammenhang mit der Verarbeitung des bedruckten Bogens in der Maschine und dessen Druckbild stehen. Es werden üblicherweise Daten einer Vielzahl von der Maschine noch abzuarbeitender Aufträge im Vorratsspeicher gespeichert, ferner Daten, die Verarbeitungsschritte anderer Maschinen einer diverse Maschinen aufweisenden Anlage betreffen.

Ist der bedruckte Bogen zu verarbeiten, gelangt dieser somit in den Bereich der Maschine, wird das reale Druckbild des Bogens beim bzw. nach dem Zuführen des zu verarbeitenden Bogens zur Maschine mittels des Bildverarbeitungssystems erfasst. Das Bildverarbeitungssystem, das insbesondere eine Kamera aufweist, ist Voraussetzung dafür, dass das erfasste reale Druckbild mit dem abgespeicherten Druckbild verglichen werden kann. Ergibt der Vergleich, dass das erfasste reale Druckbild mit dem abgespeicherten Druckbild übereinstimmt, werden, aufgrund der Verknüpfung von Daten des Druckbildes des Bogens und der für die Verarbeitung des bedruckten Bogens in der Maschine relevanten Daten, die für die Verarbeitung des bedruckten Bogens relevanten Daten im Vorratsspeicher identifiziert. Diese Daten werden in einen der Maschine zugeordneten Arbeitsspeicher geladen. In aller Regel ist dieser Arbeitsspeicher Bestandteil der Maschine. Es ist aber durchaus denkbar, dass der Arbeitsspeicher, der der Maschine zugeordnet ist, räumlich von der Maschine getrennt ist, beispielsweise, wenn dieser Arbeitsspeicher mehreren Maschinen zugeordnet ist.

Das erfindungsgemäße Verfahren stellt somit sicher, dass automatisch alle für die Verarbeitung des bedruckten Bogens relevanten Daten dem Arbeitsspeicher der Maschine zur Verfügung gestellt werden, ohne dass hierbei manuelle Eingriffe erforderlich sind oder andere technische Hilfsmittel erforderlich sind, um den zu verarbeitenden bedruckten Bogen zu identifizieren.

In den überwiegenden Fällen ist davon auszugehen, dass ein bedruckter Bogen verarbeitet wird, der Bestandteil eines Stapel ist, der aus einer Vielzahl identischer bedruckter Bogen gebildet ist. Beispielsweise ist mittels der Maschine ein Stapel zu verarbeiten, insbesondere zu schneiden, der aus eintausend übereinanderliegend angeordneten, identisch bedruckten Bögen gebildet ist. Es ist aber genauso denkbar, dass jeder bedruckte Bogen einzeln verarbeitet wird, beispielsweise durch Schneiden mittels Laser.

Der bedruckte Bogen bzw. der Stapel wird insbesondere in einer Maschine verarbeitet, die als Planschneidmaschine, Laserschneidmaschine, Stapelwender, Abstapelvorrichtung, Rückstapelvorrichtung, Puffervorrichtung, Rüttelvorrichtung, Stanzvorrichtung oder Banderoliervorrichtung ausgebildet ist.

Vorzugsweise sind die für die Verarbeitung des bedruckten Bogens bzw. Stapels relevanten Daten und die Daten betreffend das Druckbild des Bogens Daten einer Druckvorstufe und/oder Daten eines MIS-Systems (Management Information System) und/oder Daten eines Cloud-Systems.

Die für die Verarbeitung des bedruckten Bogens bzw. Stapels relevanten Daten sind insbesondere Auftragsdaten und/oder Bogendaten und/oder Schneidprogramme.

Insbesondere sind die für die Verarbeitung des bedruckten Bogens bzw. Stapels relevanten Daten und die Daten betreffend das Druckbild des Bogens Daten eines der Maschine vorgelagerten Prozesses. Von besonderem Vorteil ist es, wenn die für die Verarbeitung des bedruckten Bogens relevanten Daten bei deren Identifizierung in den der Maschine zugeordneten Arbeitsspeicher geladen werden und die Verarbeitung des bedruckten Bogens bzw. Stapels automatisch gestartet wird und automatisch erfolgt. Demzufolge kann die Verarbeitung in der Maschine bzw. die Verarbeitung in den Maschinen der Anlage automatisch erfolgen, somit ohne manuelles Einwirken.

Die für die Verarbeitung des bedruckten Bogens relevanten Daten werden insbesondere bei deren Identifizierung von der Maschine automatisch in deren zugeordneten Arbeitsspeicher geladen und es wird der Verarbeitungsauftrag automatisch gestartet, derart, dass die Maschine für den Verarbeitungsauftrag automatisch eingestellt und/oder gerüstet wird.

Vorzugsweise findet das erfindungsgemäße Verfahren bei einer Anlage Verwendung. Die Maschine bildet somit Bestandteil einer aus einzelnen Maschinen gebildeten Anlage. Die jeweilige Maschine ist bezüglich der für die Maschinen relevanten Verarbeitungsdaten und relevanten Druckbilddaten mit dem Vorratsspeicher, sei es dem internen oder dem externen Vorratsspeicher verknüpft. Die jeweilige Maschine identifiziert über das abgespeicherte Druckbild die für die Verarbeitung des bedruckten Bogens bzw. des Stapels relevanten Daten und lädt diese in den Arbeitsspeicher.

Wie erörtert ist der Arbeitsspeicher der Maschine zugeordnet. Demzufolge handelt es sich bei dem Arbeitsspeicher insbesondere um einen Maschinenarbeitsspeicher, d.h. es weist die jeweilige Maschine den Arbeitsspeicher auf oder aber es ist der Arbeitsspeicher als Anlagenarbeitsspeicher ausgebildet, womit der Arbeitsspeicher nicht konkret der Maschine zugeordnet ist, sondern der Anlage. In diesem Fall hat die jeweilige Maschine den Zugriff auf den Anlagenarbeitsspeicher.

Im Gegensatz zu dem Vorratsspeicher, in dem eine Vielzahl von Daten gespeichert sind, die über die für die Verarbeitung des bedruckten Bogens erforderlichen Daten hinausgehen, beinhaltet der Arbeitsspeicher die Daten, die für die Verarbeitung des bedruckten Bogens erforderlich sind. Der Arbeitsspeicher umfasst somit die Daten, die erforderlich sind, dass das Programm, beispielsweise bei einer Schneidmaschine das Schneidprogramm, betreffend den identifizierten bedruckten Bogen, abgearbeitet werden kann.

Weitere Merkmale der Erfindung sind in den Unteransprüchen, der Beschreibung der Figur und der Figur selbst dargestellt, wobei bemerkt wird, dass alle Einzelmerkmale und alle Kombinationen von Einzelmerkmalen weitere erfinderische Ausgestaltungen darstellen. Es zeigt:

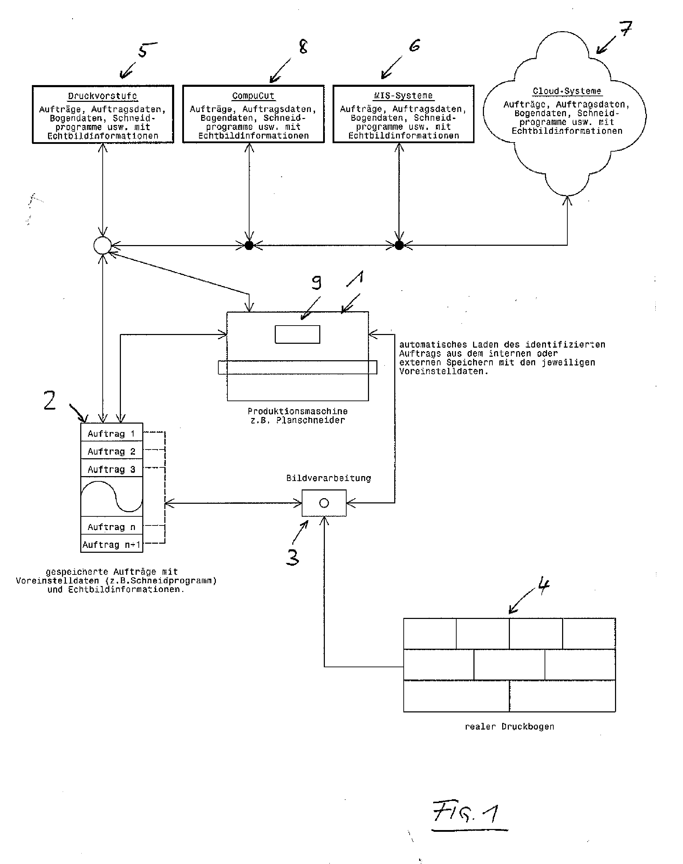

- Fig. 1: Eine Blockbilddarstellung zur Verdeutlichung des erfindungsgemäßen Verfahrens zum Verarbeiten eines bedruckten Bogens mittels einer Maschine, bei der es sich zum Beispiel um einen Planschneider handelt.

Die Figur veranschaulicht eine Maschine 1 - Planschneidmaschine - zum Schneiden von aus bedruckten Bogen gebildeten Stapeln, wobei der Ausgangsstapel durch eine Vielzahl von Längs- und Querschnitten in eine Vielzahl von Einzelstapeln bzw. Teilstapeln getrennt wird. Der Maschine 1 ist ein Vorratsspeicher 2 zugeordnet. Bei diesem handelt es sich um einen internen Vorratsspeicher der Maschine und/oder einen externen Vorratsspeicher. In diesem Vorratsspeicher 2 sind eine Vielzahl von Daten abspeicherbar bzw. abgespeichert, konkret die Schneidaufträge ― Auftrag 1 bis Auftrag n + 1 - betreffend eine Vielzahl unterschiedlich bedruckter Bogen. Zum jeweiligen Auftrag, somit beispielsweise dem Auftrag 1, sind nicht nur die relevanten Schneiddaten, insbesondere Voreinstelldaten des Schneidprogramms, abgespeichert, sondern zu diesem Auftrag auch die Echtbildinformation, somit die Daten betreffend das Druckbild des bei diesem Auftrag zu verarbeitenden bedruckten Bogens. Dies gilt entsprechend für die weiteren Aufträge 2 bis n + 1.

Eine Bildverarbeitung 3 wirkt einerseits mit dem Vorratsspeicher 2, andererseits mit dem realen Druckbogen 4 und schließlich mit der Maschine 1 zusammen, im Sinne des automatischen Ladens des identifizierten Auftrags aus dem internen oder externen Vorratsspeicher 2 mit den jeweiligen Voreinstelldaten. Die für die Verarbeitung des bedruckten Bogens/realen Druckbogens in der Maschine 1 relevanten Daten, sowie von mit diesen Daten verknüpften Daten betreffend das Druckbild, sind Daten einer Druckvorstufe 5, Daten von IMS-Systemen 6, Daten von Cloud-Systemen 7 und/oder Daten einer speziellen Druckvorstufe 8, unter der Bezeichnung "COMPUCUT" (www.polar-mohr.com) bekannt, wonach bei letztgenannter die Erstellung des Schneidprogramms entweder auf Basis eines manuell erzeugten oder digital aus der Vorstufe übernommenen Bogenlayouts erfolgt.

Das Laden der für die Verarbeitung des bedruckten Bogens 4 relevanten Daten erfolgt in einen der Maschine 1 zugeordneten Arbeitsspeicher 9, konkret einen Arbeitsspeicher 9, der Bestandteil der Maschine 1 bildet.

Aufträge, Auftragsdaten, Bogendaten, Schneidprogramme usw. werden zusammen mit Echtbildinformationen von vorgelagerten Prozessen (Druckvorstufe, MIS-Systeme, Compucut, Cloud-Systeme usw.) entweder direkt dem internen Speicher der Produktionsmaschine, vorliegend dem Planschneider 1, zugeführt oder in externen Serversystemen gespeichert, somit im Vorratsspeicher 2 gespeichert. Gelangt nun der reale Druckbogen 4 an die Maschine 1 wird er über das Bildverarbeitungssystem 3 erfasst und der zugehörige Auftrag wird anhand der Echtbildinformation in den angeschlossenen Speichersystemen - Vorratsspeicher 2 - identifiziert. Der identifizierte Auftrag wird mit allen Voreinstelldaten von der Maschine 1 bzw. von den Maschinen geladen, in den der Maschine 1 bzw. den Maschinen zugeordneten Arbeitsspeicher, und automatisch gestartet. Auf diese Weise können einzelne Maschinen, aber auch komplexe Anlagen vollautomatisch für die jeweiligen Aufträge eingestellt und gerüstet werden (Formateinstellungen, Schneidprogramme, Voreinstellung von Handlingsgeäten usw.).

Bei der beschriebenen Maschine, die als Planschneider 1 ausgebildet ist, werden Stapel geschnitten, die aus einzelnen bedruckten, identischen Bogen gebildet sind. Es ist durchaus möglich, die Bogen einzeln zu schneiden, beispielsweise bei Ausbildung der Maschine als Laserschneidmaschine, der die Bogen nacheinander zugeführt werden.

## Patentansprüche

1. Verfahren zum Verarbeiten eines bedruckten Bogens in einer Maschine (1) mit folgenden Merkmalen:
- Zuführen von für die Verarbeitung des bedruckten Bogens (4) in der Maschine (1) relevanten Daten sowie von mit diesen Daten verknüpften Daten betreffend das Druckbild des Bogens zu einem internen Vorratsspeicher (2) der Maschine und/oder einem externen Vorratsspeicher (2), wobei im Vorratsspeicher (2) weitere Daten abspeicherbar sind,
- Erfassen des realen Druckbildes des Bogens (4) beim bzw. nach dem Zuführen des zu verarbeitenden Bogens zur Maschine (1) mittels eines Bildverarbeitungssystems (3),
- Vergleichen des erfassten realen Druckbildes mit dem abgespeicherten Druckbild, sowie Identifizierung der für die Verarbeitung des bedruckten Bogens relevanten Daten im Vorratsspeicher (2) bei Übereinstimmung von realem Druckbild und abgespeichertem Druckbild,
- Laden der für die Verarbeitung des bedruckten Bogens relevanten Daten in einen der Maschine (1) zugeordneten Arbeitsspeicher (9).

2. Verfahren nach Anspruch 1, wobei ein bedruckter Bogen verarbeitet wird, der Bestandteil eines Stapels ist, der aus einer Vielzahl identischer bedruckter Bogen gebildet ist.

3. Verfahren nach Anspruch 1 oder 2, wobei der bedruckte Bogen bzw. der Stapel in einer Maschine verarbeitet wird, die als Planschneidmaschine (1), Laserschneidmaschine, Stapelwender, Abstapelvorrichtung, Rückstapelvorrichtung, Puffervorrichtung, Rüttelvorrichtung, Stanzvorrichtung oder Banderoliervorrichtung ausgebildet ist.

4. Verfahren nach einem der Ansprüche 1 bis 3, wobei die für die Verarbeitung des bedruckten Bogens bzw. des Stapels relevanten Daten und die Daten betreffend das Druckbild des Bogens Daten eines der Maschine vorgelagerten Prozesses sind.

5. Verfahren nach einem der Ansprüche 1 bis 4, wobei die für die Verarbeitung des bedruckten Bogens bzw. des Stapels relevanten Daten und die Daten betreffend das Druckbild des Bogens Daten einer Druckvorstufe (5, 8) und/oder Daten eines MIS-Systems (6) und/oder Daten eines Cloud-Systems (7) sind.

6. Verfahren nach einem der Ansprüche 1 bis 5, wobei die für die Verarbeitung des bedruckten Bogens bzw. des Stapels relevanten Daten Auftragsdaten und/oder Bogendaten und/oder Schneidprogramme sind.

7. Verfahren nach einem der Ansprüche 1 bis 6, wobei die für die Verarbeitung des bedruckten Bogens relevanten Daten bei deren Identifizierung in den der Maschine (1) zugeordneten Arbeitsspeicher (9) geladen werden und die Verarbeitung des bedruckten Bogens bzw. Stapels automatisch gestartet wird und automatisch erfolgt.

8. Verfahren nach einem der Ansprüche 1 bis 7, wobei die für die Verarbeitung des bedruckten Bogens relevanten Daten bei deren Identifizierung von der Maschine (1) automatisch in den zugeordneten Arbeitsspeicher (9) geladen werden und der Verarbeitungsauftrag automatisch gestartet wird, derart, dass die Maschine (1) für den Verarbeitungsauftrag automatisch eingestellt und/oder gerüstet wird.

9. Verfahren nach einem der Ansprüche 1 bis 8, wobei die Maschine (1) Bestandteil einer aus einzelnen Maschinen gebildeten Anlage ist, wobei die jeweilige Maschine bezüglich der für die Maschine relevanten Verarbeitungsdaten und relevanten Druckbilddaten mit dem Vorratsspeicher (2) verknüpft ist, die jeweilige Maschine über das abgespeicherte Druckbild die für die Verarbeitung des bedruckten Bogens bzw. des Stapels relevanten Daten identifiziert und diese in den Arbeitsspeicher (9) der Maschine lädt.

10. Verfahren nach Anspruch 9, wobei der Arbeitsspeicher ein Maschinenarbeitsspeicher oder ein Anlagenarbeitsspeicher ist.
